(19) Europäisches Patentamt
European Patent Office
Office européen des brevets

(11) **EP 4 760 859 A1**

(12) **EUROPEAN PATENT APPLICATION**
published in accordance with Art. 153(4) EPC

(43) Date of publication:
**17.06.2026  Bulletin 2026/25**

(21) Application number: **25762405.6**

(22) Date of filing: **28.02.2025**

(51) International Patent Classification (IPC):
$H01M\ 10/42^{(2006.01)}$    $H01M\ 4/66^{(2006.01)}$
$H01B\ 3/30^{(2006.01)}$    $H01B\ 3/44^{(2006.01)}$
$H01M\ 10/0525^{(2010.01)}$

(52) Cooperative Patent Classification (CPC):
H01B 3/30; H01B 3/44; H01M 4/66; H01M 10/0525;
H01M 10/42; Y02E 60/10

(86) International application number:
**PCT/KR2025/002786**

(87) International publication number:
**WO 2025/183488 (04.09.2025 Gazette 2025/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.02.2024  KR 20240030144
27.02.2025  KR 20250026150**

(71) Applicant: **SK On Co., Ltd.
Seoul 03161 (KR)**

(72) Inventors:
• **KIM, Minhyung
Daejeon 34124 (KR)**

• **PARK, Kyungsup
Daejeon 34124 (KR)**
• **YANG, Jungmin
Daejeon 34124 (KR)**
• **WON, Jonghyeon
Daejeon 34124 (KR)**
• **YOU, Seungjong
Daejeon 34124 (KR)**
• **LEE, Donghoon
Daejeon 34124 (KR)**
• **JEONG, Minju
Daejeon 34124 (KR)**

(74) Representative: **Prüfer & Partner mbB
Patentanwälte · Rechtsanwälte
Sohnckestraße 12
81479 München (DE)**

(54) **ELECTRODE FOR SECONDARY BATTERY AND SECONDARY BATTERY COMPRISING SAME**

(57)    The present disclosure relates to an electrode for a secondary battery and a secondary battery comprising same. The electrode for a secondary battery according to one embodiment comprises: a coated portion where an electrode active material layer is positioned on a current collector and an uncoated portion where the electrode active material layer is not positioned on the current collector; and an insulating coating layer disposed on at least a portion of the uncoated portion and including an electrode insulating polymer, wherein the thermal expansion coefficient of the electrode insulating polymer may be 66 um/m°C to 127 um/m°C.

EP 4 760 859 A1

## Description

[Technical Field]

The present disclosure relates to an electrode for a secondary battery and a secondary battery including the same.

[Background Art]

Recently, the use of portable electronic devices such as mobile phones and laptop computers has been increasing, and as the research and development of electric vehicles and hybrid electric vehicles which may replace vehicles using fossil fuel such as gasoline vehicles and diesel vehicles are in progress, there has been a demand for smaller, lighter, and longer-lasting secondary batteries. In particular, in order to achieve the miniaturization and lightweight purposes, research on a secondary battery having high energy density is actively in progress.

In order to achieve high energy density, it is essential to use a high-density electrode. However, a rolling process at a high rolling rate is performed in order to manufacture a high-density electrode, and various quality defects such as waves, wrinkles, breakages, and peeling may occur during this process. These types of quality defects are mainly due to a difference in the properties of materials applied to an electrode such as a current collector and an active material, in particular, a difference in thermal nature of the materials.

Meanwhile, a short circuit may occur in the abnormal situation in which the positive/negative electrode current collector parts of the secondary battery are directly contacted. When the short circuit occurs, it may lead to ignition, which may cause fatal danger. In order to prevent it, attempts are being made to prevent a risk of short circuits by applying an insulating coating to an uncoated portion of the electrode in which an electrode current collector is not coated with an active material.

However, when the thermal nature of the insulating coating is not considered, quality defects as described above may occur more seriously in each boundary of a current collector, an active material layer, and a coating layer.

Therefore, development of an electrode for a secondary battery which may achieve safety and high energy density while simultaneously improving various defect matters which may occur during a secondary battery manufacturing process is demanded.

## [Disclosure]

[Technical Problem]

An object of the present disclosure is to provide an electrode for a secondary battery capable of improving various defect matters which may occur in a manufacturing process of an electrode, simultaneously with showing high energy density.

Another object of the present disclosure is to provide a secondary battery having improved safety.

The electrode for a secondary battery of the present disclosure may be widely applied to a green technology field such as electric vehicles, battery charging stations, and other solar power generations and wind power generations using batteries. In addition, an electrode for a secondary battery of the present disclosure may be used in eco-friendly electric vehicles, hybrid vehicles, and the like for preventing climate change by suppressing air pollution and greenhouse gas emissions.

[Technical Solution]

In one general aspect, an electrode for a secondary battery includes: a coated portion in which an electrode active material layer is placed on a current collector and an uncoated portion in which the electrode active material layer is not placed on the current collector; and an insulating coating layer which is placed on at least a part of the uncoated portion and includes an electrode insulating polymer, wherein the electrode insulating polymer has a thermal expansion coefficient of 66 $\mu$m/m°C to 127 um/m°C.

The electrode insulating polymer according to an example embodiment may have the thermal expansion coefficient of 72 um/m°C to 80 um/m°C.

The electrode insulating polymer according to an example embodiment may include at least one selected from the group consisting of a polyamide-based polymer, a polyamideimide-based polymer, a fluoroethylene-based polymer, a butadiene-based rubber, and a copolymer thereof.

The electrode insulating polymer according to an example embodiment may include the polyamide-based polymer and the fluoroethylene-based polymer, and the polyamide-based polymer and the fluoroethylene-based polymer may be included at a weight ratio of 1:8.5 to 1:9.5.

The electrode insulating polymer according to an example embodiment may include a copolymer including an amide-imide-based first repeating unit; and at least one second repeating unit selected from the group consisting of butadiene-based, nitril-based, and styrene-based repeating units.

The first repeating unit according to an example embodiment may include an aromatic ring.

The first repeating unit according to an example embodiment may include a benzene ring.

The second repeating unit according to an example embodiment may be at least one selected from the group consisting of butadiene-based, acrylonitrile-butadiene-based, and hydrogenated acrylonitrile-butadiene-based repeating units.

A mole ratio between the first repeating unit and the second repeating unit according to an example embodiment may be 60 to 80:40 to 20.

The copolymer according to an example embodiment may be at least one selected from the group consisting of a random copolymer, an alternating copolymer, a block copolymer, and a graft copolymer.

The insulating coating layer according to an example embodiment may be placed on at least a part of the coated portion and at least a part of the uncoated portion.

The insulating coating layer placed on at least a part of the uncoated portion and the insulating coating layer placed on at least a part of the coated portion may be consecutive.

The electrode according to an example embodiment may be a positive electrode, and the current collector may include at least one metal selected from the group consisting of stainless steel, nickel, titanium, aluminum, and an alloy thereof.

The uncoated portion in which the insulating coating layer according to an example embodiment is placed may have an elongation of 25% to 43%.

In another general aspect, a secondary battery includes the electrode according to an example embodiment.

[Advantageous Effects]

According to an example embodiment of the present disclosure, the processability of a high energy density electrode for a secondary battery may be improved, thereby improving a defect rate of an electrode for a secondary battery.

According to another example embodiment of the present disclosure, energy efficiency and safety of a secondary battery may be improved.

[Best Mode]

Since the embodiments described in the present specification may be modified in many different forms, the technology according to an example embodiment is not limited to the embodiments set forth herein. Furthermore, throughout the specification, unless otherwise particularly stated, the word "comprise", "equipped", "contain", or "have" does not mean the exclusion of any other constituent element, but means further inclusion of other constituent elements, and elements, materials, or processes which are not further listed are not excluded.

The numerical range used in the present specification includes all values within the range including the lower limit and the upper limit, increments logically derived from the form and breadth of a defined range, all double limited values, and all possible combinations of the upper limits and the lower limits in the numerical range defined in different forms. As an example, when it is defined that a content of a composition is 10% to 80% or 20% to 50%, it should be interpreted that a numerical range of 10% to 50% or 50% to 80% is also described in the present specification. Unless otherwise defined in the present specification, values which may be outside a numerical range due to experimental error or rounding off of a value are also included in the defined numerical range.

Hereinafter, unless otherwise particularly defined in the present specification, "about" may be considered as a value within 30%, 25%, 20%, 15%, 10%, or 5% of a stated value.

The term "secondary battery" used in the present specification may refer to a lithium secondary battery which produces electrical energy by oxidation and reduction reactions when lithium ions are inserted and desorbed in a positive electrode and a negative electrode.

Hereinafter, the present disclosure will be described in detail. However, it is only illustrative and the present disclosure is not limited to the specific embodiments which are illustratively described in the present disclosure.

<Electrode insulating polymer>

The electrode insulating polymer according to an example embodiment of the present disclosure may refer to an electrode insulating polymer which is applied on at least a part of an uncoated portion of the electrode so that a short circuit does not occur even when both electrodes of a secondary battery are in contact. The electrode insulating polymer according to an example embodiment may have a thermal expansion coefficient of, as a lower limit, 66 um/m°C or more, 70 $\mu$m/m°C or more, 72 $\mu$m/m°C or more, or 74 $\mu$m/m°C or more, and as an upper limit, 127 um/m°C or less, 120 $\mu$m/m°C or less, 110 $\mu$m/m°C or less, 100 um/m°C or less, 90 um/m°C or less, 80 um/m°C or less, 78 um/m°C or less, and specifically, 66 $\mu$m/m°C to 127 $\mu$m/m°C or 72 $\mu$m/m°C to 80$\mu$m/m°C.

The electrode insulating polymer according to an example embodiment may include at least one selected from a polyamide-based polymer, a polyamideimide-based polymer, a fluoroethylene-based polymer, a butadiene-based rubber, and a copolymer thereof.

According to an example embodiment, the polyamide-based polymer refers to a polymer including a repeating unit including an amide group and may be polyamide or polycaprolactam.

According to an example embodiment, the polyamideimide-based polymer refers to a polymer including a repeating unit including an amide group and an imide group and may be bis-(4-aminophenyl)-methane-trimellitic anhydride copolymer, 4,4'-diaminodiphenylsulfone-trimellitic anhydride copolymer, bisphenol A-diamine-trimellitic anhydride copolymer, or p-phenylenediamine-trimellitic anhydride copolymer.

According to an example embodiment, the fluoroethylene-based polymer may be polyvinylidene fluoride or polytetrafluoroethylene.

According to an example embodiment, the butadiene-based rubber may be butadiene rubber (BR), nitrile butadiene rubber (NBR), hydrogenated nitrile butadiene rubber (H-NBR), or styrene butadiene rubber (SBR).

The electrode insulating polymer according to an example embodiment may include at least two or more of a polyamide-based polymer, a polyamideimide-based polymer, a fluoroethylene-based polymer, or a butadiene-based rubber (specifically, a mixture of two or more polymers); or a copolymer of a polyamide-based polymer, a polyamideimide-based polymer, a fluoroethylene-based polymer, or a butadiene-based rubber.

According to an example embodiment, the electrode insulating polymer may include a polyamide-based polymer and a fluoroethylene-based polymer, and specifically, a weight ratio between the polyamide-based polymer and the fluoroethylene-based polymer may be 1:8.5 to 1:9.5, specifically 1:8.8 to 1:9.2, and more specifically, 1:8.8 to 1:9.0. When the content of the polyamide-based polymer is out of the weight ratio range and is too low, it is excessively swollen during impregnation with an electrolyte solution in an assembly process, so that it is difficult to secure adhesive strength to a substrate, and when the content of the polyamide-based polymer is too high, it is difficult to effectively distribute stress applied in a rolling process and the like, which leads to deterioration of driving performance such as breakage.

In addition, the electrode insulating polymer according to an example embodiment may be a copolymer including an amide-imide-based first repeating unit; and at least one second repeating unit selected from the group consisting of butadiene-based, nitrile-based, and styrene-based repeating units.

The term "repeating unit" used in the present specification refers to a monomer structure appearing repeatedly within a polymer by connecting monomers for forming a polymer to each other by addition polymerization or condensation polymerization. As an example, polybutadiene which is butadiene rubber is a polymer having a repeating unit derived from butadiene and means that butadiene monomers are connected to each other by an addition polymerization reaction to repeatedly show the structure of a butadiene monomer in a polybutadiene polymer.

According to an example embodiment, the first repeating unit may include an aromatic ring, and specifically, may include at least one selected from the group consisting of a substituted or unsubstituted C6 to C20 aromatic ring, a substituted or unsubstituted C6 to C10 aromatic ring, a substituted or unsubstituted C6 to C20 heteroaromatic ring, and a substituted or unsubstituted C6 to C10 heteroaromatic ring, and specifically, may include substituted or unsubstituted benzene or substituted or unsubstituted naphthalene.

As an example, an amide-imide repeating unit which is the first repeating unit may be prepared from monomer components including a diamine-based compound and a carboxylic acid-based compound or a diamine-based compound and an isocyanate-based compound. Specifically, the first repeating unit may be prepared by condensation polymerizing the diamine-based compound and the carboxylic acid-based compound or the diamine-based compound and the isocyanate-based compound so that a repeating unit structure in which an amide structure and an imide structure are connected is repeatedly shown in the electrode insulating polymer. The specific structure of the amide-imide repeating unit may vary depending on the reacted monomer.

The second repeating unit according to an example embodiment may be at least one selected from the group consisting of butadiene-based, acrylonitrile-butadiene-based, and hydrogenated acrylonitrile-butadiene-based repeating units.

As an example, the hydrogenated acrylonitrile-butadiene repeating unit which is the second repeating unit may be prepared from monomer components including an acrylonitrile compound and a butadiene compound. Specifically, the second repeating unit may be prepared by addition polymerizing an acrylonitrile compound and a butadiene compound so that a repeating unit structure in which a hydrogenated acrylonitrile structure and a butadiene structure are connected is repeatedly shown in the electrode insulating polymer. The specific structure of the hydrogenated acrylonitrile-butadiene repeating unit may vary depending on the reacted monomer.

In an example embodiment, a mole ratio between the first repeating unit and the second repeating unit may be 60 to 80:40 to 20, more specifically 70 to 75:30 to 25. When the copolymer has the repeating unit mole ratio as such, the thermal expansion coefficient of the electrode insulating polymer may satisfy the numerical range as described above.

The copolymer according to an example embodiment may be at least one selected from the group consisting of a random copolymer, an alternating copolymer, a block copolymer, and a graft copolymer, and more specifically, a graft copolymer.

In the conventional field of secondary batteries, polyamideimide may be applied to an uncoated portion of a positive electrode or a negative electrode and used as an electrode insulating polymer for preventing short circuit occurrence when is in contact with positive electrode/negative electrodes. However, since a conventional electrode insulating polymer including only polyamideimide has relieved residual stress during a drying process in the manufacturing process of an electrode for a secondary battery, it raises concerns about poor quality such as curling in an uncoated portion, easily causes breakage in the boundary of a coated portion and an uncoated portion of a current collector during the rolling and winding process of an electrode, and also, may cause fatal process defects such as peeling off of an insulating coating layer during impregnation with an electrolyte solution. These problems may occur more seriously particularly in a high-density electrode for high energy density, and the density of the electrode may be limited due to the process problems described above.

However, the electrode insulating polymer according to the present disclosure includes at least one selected from the group consisting of a polyamide-based polymer, a polyamideimide-based polymer, a fluoroethylene-based polymer, a butadiene-based rubber, and a copolymer thereof and satisfies a thermal expansion coefficient in a specific range, thereby improving process problems and the like.

<Electrode for secondary battery>

The electrode for a secondary battery according to an example embodiment may include: a coated portion in which an electrode active material layer is placed on a current collector and an uncoated portion in which the electrode active material layer is not placed on the current collector, and an insulating coating layer which is placed on at least a part of the uncoated portion and includes an electrode insulating polymer. The electrode for a secondary battery according to an example embodiment may refer to a positive electrode. The positive electrode may include a positive electrode current collector and a positive electrode active material layer placed on at least one surface of the current collector, and the current collector may include the coated portion in which the positive electrode active material layer is placed on at least one surface and the uncoated portion in which the positive electrode active material layer is not placed on the current collector, and the insulating coating layer placed by applying the electrode insulating polymer as described above on at least a part of the uncoated portion may be included.

In an example embodiment, the positive electrode current collector may include at least one metal selected from the group consisting of stainless steel, nickel, titanium, aluminum, or an alloy thereof. Specifically, the metal may be aluminum, and the metal may be aluminum which is not separately treated or aluminum which is surface-treated with carbon, nickel, titanium, or silver. The positive electrode current collector may be, though is not limited thereto, for example, 10 to 50 $\mu m$.

Meanwhile, as described above, the electrode insulating polymer according to some implementation of the present disclosure may have a thermal expansion coefficient of, as a lower limit, 66 um/m°C or more, 70 um/m°C or more, 72 um/m°C or more, or 74 um/m°C or more and as an upper limit, 127 $\mu m/m°C$ or less, 120 $\mu m/m°C$ or less, 110$\mu m/m°C$ or less, 100 $\mu m/m°C$ or less, 90 $\mu m/m°C$ or less, 80 um/m°C or less, or 78 um/m°C or less, and specifically, 66 um/m°C to 127 um/m°C or 72 $\mu m/m°C$ to 80 um/m°C. It is understood that by having the thermal expansion coefficient in the numerical range as such, when the electrode insulating polymer is introduced to the current collector for electrode insulation coating, process defects or safety defects as described above may be improved, which is mainly due to differences in elongation and stress relief between the current collector and the coated portion or the uncoated portion, as compared with the case of introducing a conventional electrode insulating polymer.

In an example embodiment, the coated portion may refer to an area of the entire area of the current collector in which the electrode active material layer is placed on at least one surface of the current collector.

According to an example embodiment, the insulating coating layer may be placed on at least a part of the coated portion and at least a part of the uncoated portion. In addition, the insulating coating layer placed on at least a part of the uncoated portion and the insulating coating layer placed on at least a part of the coated portion may be consecutive.

The positive electrode active material layer may include a positive electrode active material. The positive electrode active material may include a compound which may reversibly intercalate and deintercalate lithium ions.

According to illustrative examples, the positive electrode active material may include a lithium-nickel metal oxide. The lithium-nickel metal oxide may further include at least one of cobalt (Co), manganese (Mn), and aluminum (Al).

In some example embodiments, the positive electrode active material or the lithium-nickel metal oxide may include a layered structure or a crystal structure represented by the following Chemical Formula 1:

[Chemical Formula 1]  $Li_xNi_aM_bO_{2+z}$

wherein $0.9 \leq x \leq 1.2$, $0.6 \leq a \leq 0.99$, $0.01 \leq b \leq 0.4$, and $-0.5 \leq z \leq 0.1$. As described above, M may include Co, Mn, and/or Al.

The chemical structure represented by Chemical Formula 1 shows a bonding relationship included in the layered structure or the crystal structure of the positive electrode active material, but other additional elements are not excluded. For example, M includes Co and/or Mn, and Co and/or Mn may be provided as a main active element of the positive electrode active material with Ni. Chemical Formula 1 is provided for expressing the bonding relationship of the main active elements and should be understood as a formula covering introduction of or substitution with an additional element.

In an example embodiment, auxiliary elements which are added to the main active elements to enhance chemical stability of the positive electrode active material or the layered structure/crystal structure may be further included. The auxiliary element may be incorporated into the layered structure/crystal structure to form a bond, and in this case, it should also be understood to be included in the range of the chemical structure represented by Chemical Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may act as, for example, an auxiliary active element which contributes to the capacity/output activity of the positive electrode active material with Co or Mn, like Al.

For example, the positive electrode active material or the lithium-nickel metal oxide may include a layered structure or a crystal structure represented by the following Chemical Formula 1-1:

[Chemical Formula 1-1]  $Li_xNi_aM1_{b1}M2_{b2}O_{2+z}$

wherein M1 includes Co, Mn, and/or Al; M2 includes the auxiliary elements described above; and $0.9 \leq x \leq 1.2$, $0.6 \leq a \leq 0.99$, $0.01 \leq b1+b2 \leq 0.4$, and $-0.5 \leq z \leq 0.1$.

The positive electrode active material may further include a coating element or a doping element. For example, elements which are substantially identical or similar to the auxiliary elements described above may be used as a coating element or a doping element. For example, among the elements described above, a single element or a combination of two or more elements may be used as a coating element or a doping element.

The coating element or the doping element may be present on the surface of the lithium-nickel metal oxide particles, or may penetrate through the surface of the lithium-nickel metal composite oxide particles and be included in the combined structure represented by Chemical Formula 1 or Chemical Formula 1-1.

The positive electrode active material may include a nickel-cobalt-manganese (NCM)-based lithium oxide. In this case, an NCM-based lithium oxide having an increased nickel content may be used.

Ni may be provided as a transition metal related to the output and capacity of a lithium secondary battery. Therefore, as described above, since a high-content (high-Ni) composition is adopted into the positive electrode active material, a high-capacity positive electrode and a high-capacity lithium secondary battery may be provided.

However, as the content of Ni increases, the long-term preservation stability and the life stability of the positive electrode or the secondary battery may be relatively reduced, and a side reaction with an electrolyte may be increased. However, according to illustrative examples, the life stability and the capacity retention properties may be improved by Mn, while maintaining the electrical conductivity by including Co.

The content of Ni in the NCM-based lithium oxide (for example, the mole fraction of nickel of the total moles of nickel, cobalt, and manganese) may be 0.6 or more, 0.7 or more, or 0.8 or more. In some example embodiments, the content of Ni may be 0.8 to 0.95, 0.82 to 0.95, 0.83 to 0.95, 0.84 to 0.95, 0.85 to 0.95, or 0.88 to 0.95.

In some example embodiments, the positive electrode active material may include a lithium cobalt oxide-based active material, a lithium manganese oxide-based active material, a lithium nickel oxide-based active material, or a lithium iron phosphate (LFP)-based active material (for example, $LiFePO_4$).

In some example embodiments, the positive electrode active material may include, for example, a Mn-rich-based active material having a chemical structure or crystal structure represented by Chemical Formula 2, a Li rich layered oxide (LLO)/over lithiated oxide (OLO)-based active material, or a Co-less-based active material:

[Chemical Formula 2]  $p[Li_2MnO_3]\cdot(1-p)[Li_qJO_2]$

wherein $0<p<1$ and $0.9 \leq q \leq 1.2$; and J includes at least one element of Mn, Ni, Co, Fe, Cr, V, Cu, Zn, Ti, Al, Mg, and B.

In an example embodiment, the binder may further include a binder and a conducting material.

The binder may include polyvinylidene fluoride (PVDF), poly(vinylidene fluoride-co-hexafluoropropylene), polyacrylonitrile, polymethylmethacrylate, butadiene rubber, and the like. In an example embodiment, a PVDF-based binder may be used as a positive electrode binder.

The conducting material may be added for increasing conductivity of the positive electrode active material layer and/or mobility of lithium ions or electrons. For example, the conducting material may include carbon-based conducting materials such as graphite, carbon black, acetylene black, ketjen black, graphene, carbon nanotubes, vapor-grown carbon fiber (VGCF), and carbon fiber, and/or metal-based conducting materials including tin, tin oxide, titanium oxide, perovskite materials such as $LaSrCoO_3$ and $LaSrMnO_3$, and the like, but is not limited thereto.

In an example embodiment, the coated portion may refer to an area of the entire area of the current collector in which the electrode active material layer is not placed on any one surface of the current collector. Otherwise, it may refer to an area excluding the coated portion from the entire area.

In an example embodiment, the uncoated portion in which the insulating coating layer is placed may have an elongation of 25% to 43%, and more specifically 30% to 38%.

In some example embodiments, the electrode insulating polymer included in the insulating coating layer may be an electrode insulating polymer having the thermal expansion coefficient according to some implementation of the present disclosure described above, and the current collector may include aluminum.

The elongation may refer to a maximum elongation measured by separately collecting an uncoated portion in which the insulating coating layer is placed and performing a tensile test of the collected uncoated portion with, for example, a Universal testing machine, in the electrode for a secondary battery according to some implementation of the present disclosure.

In some example embodiments, since the electrode insulating polymer having the thermal expansion coefficient as described above is applied on the uncoated portion, the uncoated portion may show the elongation in the range as described above.

It is understood that the uncoated portion has the elongation in the numerical range described above, whereby process defects or safety defects as described above may be improved, which is mainly due to differences in elongation and stress relief between the current collector and the coated portion or the uncoated portion, as compared with the case in which an insulating coating layer is formed by introducing the conventional electrode insulating polymer to the uncoated portion.

The electrode for a secondary battery according to an example embodiment may be a positive electrode as described above, but is not necessarily limited thereto, and in an illustrative example, the electrode for a secondary battery may refer to a negative electrode or refer to both the positive electrode and the negative electrode.

When the electrode for a secondary battery according to an example embodiment refers to a negative electrode, the negative electrode may include a negative electrode current collector and a negative electrode active material layer placed on at least one surface of the current collector and include the coated portion in which the electrode active material layer is placed on the current collector and the uncoated portion in which the electrode active material layer is not placed on the current collector, and the insulating coating layer placed by applying the electrode insulating polymer as described above on at least a part of the uncoated portion may be included.

<Secondary battery>

Some implementation of the present disclosure may provide a secondary battery including an electrode, a separator interposed between the electrodes, an electrolyte, and other additives. The secondary battery may include the electrode for a secondary battery according to some implementation of the present disclosure as any one of a positive electrode or a negative electrode.

The secondary battery may be manufactured into a form selected from, for example, pouch, prismatic, cylindrical, coin shapes, and the like.

The secondary battery according to some implementation of the present disclosure may be applied to various fields such as laptop computers, mobile phones, electric vehicles, and hybrid electric vehicles.

[Best Mode for Carrying Out the Invention]

Hereinafter, the examples of the present disclosure will be further described with reference to the specific experimental examples. It is apparent to those skilled in the art that the examples and the comparative examples included in the experimental examples only illustrate the present disclosure and do not limit the appended claims, and various modifications and alterations of the examples may be made within the range of the scope and spirit of the present disclosure, and these modifications and alterations will fall within the appended claims.

**Experimental Examples**

(Example 1)

A slurry for forming a positive electrode active material layer having the composition of the following Table 1 was applied on an aluminum foil current collector by slot die coating so that an uncoated portion at a 15 mm level was formed on both sides in the width direction of the current collector, thereby forming a positive electrode active material layer. Herein, the width direction may refer to a direction perpendicular to the travel direction of the current collector and also refer to a direction perpendicular to the boundary of an uncoated portion and a coated portion.

A composition for forming an insulating coating layer was applied over the uncoated portion in which the positive electrode active material layer was not coated and a part of the positive electrode active material layer in contact with the uncoated portion, thereby forming an insulating coating layer having a width of about 5 mm. The composition for forming an insulating coating layer included a graft copolymer of polyamideimide (PAI) and hydrogenated acrylonitrile butadiene rubber (HNBR) (PAI: HNBR repeating unit mole ratio = 75:25, copolymerization temperature: 130°C) as the electrode insulating polymer, and specifically, polyamideimide (PAI) was a bis-(4-aminophenyl)-methane-trimellitic anhydride copolymer. Thereafter, drying at 120°C was performed to manufacture a positive electrode in which a positive electrode active material and an insulating coating layer were formed on the current collector.

[Table 1]

| Slurry for forming positive electrode active material layer | | Content |
|---|---|---|
| Positive electrode active material | $Li[Ni_{0.6}Co_{0.2}Mn_{0.2}]O_2$ | 96 wt% |
| Conducting material | Carbon black | 2 wt% |
| Binder | PVDF | 2 wt% |
| Slurry loading amount | | 18 mg/cm$^2$ |

(Example 2) A positive electrode was manufactured in the same manner as in Example 1, except that a polyvinylidene fluoride (PVDF) polymer and a polyamide (PA) polymer were mixed at a weight ratio of 9:1 and used as the electrode insulating polymer.

(Example 3)

A positive electrode was manufactured in the same manner as in Example 1, except that the copolymer was polymerized at a temperature of higher than 130°C.

(Comparative Example 1)

A positive electrode was manufactured in the same manner as in Example 1, except that a PVDF polymer was used as the electrode insulating polymer.

(Comparative Example 2)

A positive electrode was manufactured in the same manner as in Example 1, except that a polyamideimide (PAI) polymer was used as the electrode insulating polymer.

(Comparative Example 3)

A positive electrode was manufactured in the same manner as in Example 1, except that a polyacrylonitrile (PAN) polymer was used as the electrode insulating polymer.

<Evaluation Examples>

Evaluation Example 1: Evaluation of thermal expansion coefficient of electrode insulating polymer and current collector elongation

The thermal expansion coefficient of each polymer used as the electrode insulating polymer in Examples 1 to 3 and Comparative Examples 1 to 3 and the current collector elongation of the portion in which the insulating coating layer was formed by applying each of the polymers were evaluated, and the results are shown in the following Table 2. The thermal expansion coefficient was measured by heating each polymer in a temperature range of 25°C to 200°C at 5°C/min using thermal mechanical analysis (TMA Q400, TA Instruments) equipment to measure a strain and calculating the thermal expansion coefficient through a change in slope of the dimension change-temperature curve obtained therefrom, and the elongation was obtained by collecting only the portion in which the insulating coating layer was formed by applying an insulating polymer on each current collector and then performing a tensile test with a gauge length of 50 mm at a tensile speed of 20 mm/min using a universal testing machine (UTM 3400, Instron) to measure a maximum elongation.

[Table 2]

| Classification | Thermal expansion coefficient (um/m°C) | Elongation (%) |
|---|---|---|
| Example 1 | 77.06 | 35 |
| Example 2 | 126.02 | 18 |
| Example 3 | 74.66 | 33 |
| Comparative Example 1 | 127.8 | 10 |
| Comparative Example 2 | 31 | 18 |
| Comparative Example 3 | 65 | 20 |

Evaluation Example 2: Evaluation of processability of electrode for secondary battery

The positive electrodes in which the positive electrode active material layer and the insulating coating layer prepared in Examples 1 to 3 and Comparative Examples 1 to 3 were formed were rolled with a roll press to manufacture positive electrodes of 800 m. At this time, the traveling speed of the roll press was 20 m/min.

During the traveling process for rolling of a positive electrode, the number of electrode breakages was checked to evaluate rolling processability, which is shown in the following Table 3. When the number of breakages was 8 or more, it was evaluated as ×, when 5 or more and less than 8, it was evaluated as △, and when less than 5, it was evaluated as o, excluding the case in which breakages occurred for reasons unrelated to the polymer such as worker's error, during the traveling process for rolling the prepared positive electrodes prepared in Examples 1 to 3 and Comparative Examples 1 to 3.

Meanwhile, the positive electrodes prepared in Examples 1 to 3 and Comparative Examples 1 to 3 were notched to a predetermined size, and then it was confirmed whether wrinkles or tears occurred to evaluate notching processability, which is shown in the following Table 3. When there were no special circumstances similar to the shape when notching a common electrode for a secondary battery in which the electrode insulating polymer was not applied on the uncoated portion, it was evaluated as ∘, and in comparison to this, the case of wrinkle occurrence was evaluated as △, and the case of tear occurrence was evaluated as ×.

In addition, the positive electrodes manufactured in Examples 1 to 3 and Comparative Examples 1 to 3 were notched to a predetermined size and dried in vacuum at a temperature of 120°C at 5 torr for 12 hours, and then a degree of camber occurrence on an uncoated portion end of the electrode from the ground was evaluated and is shown in the following Table 3. The degree of camber occurrence was measured with a ruler, and an average value of values measured in the upper portion, the middle portion, and the lower portion based on the electrode length direction was calculated as a curl average value and measured. Herein, the length direction refers to a direction parallel to the traveling direction of the positive electrode during slurry coating and rolling, and may also refer to a direction parallel to the boundary of the uncoated portion and the coated portion.

In addition, the positive electrodes prepared in Examples 1 to 3 and Comparative Examples 1 to 3 were impregnated with an electrolyte solution for 24 hours, and then a swelling ratio and surface peeling were confirmed to evaluate resistance to electrolyte solution, and these are shown in the following Table 3. Whether the surface was peeled off was evaluated depending on whether the surface peeling occurred on the insulating coating layer when impregnated with an electrolyte solution, and the swelling ratio was evaluated by measuring the insulating coating layer thickness before and after impregnation with the electrolyte solution and performing calculation by the following relation formula:

[Relation Formula]

Swelling ratio (%) = ((thickness of insulating coating layer after impregnation with electrolyte solution) - (thickness of insulating coating layer before impregnation with electrolyte solution))/(thickness of insulating coating layer before impregnation with electrolyte solution)

[Table 3]

| Classification | Curl average value (mm) | Rolling processability | Notching processability | Whether surface was peeled off | Swelling ratio (%) |
|---|---|---|---|---|---|
| Example 1 | 4 | ○ | ○ | Normal | 7 |
| Example 2 | 9 | ○ | ○ | Normal | 8 |
| Example 3 | 3.5 | ○ | ○ | Normal | 6.6 |
| Comparative Example 1 | 15 | × | × | Peeling occurrence | 19 |
| Comparative Example 2 | 10 | Δ | Δ | Normal | 5 |
| Comparative Example 3 | 14 | × | Δ | Normal | 6 |

Referring to Table 3, it was confirmed that Examples 1 to 3 in which the electrode insulating polymer having the thermal expansion coefficient range according to some implementation of the present disclosure was applied had the number of breakages of less than 5 in the 800 m traveling process, but in Comparative Examples 1 to 3 in which other electrode insulating polymers were applied, Comparative Examples 1 and 3 showed the number of breakages of 8 or more and Comparative Example 2 showed the number of breakages of 5 or more and less than 8. Thus, it was confirmed that Examples 1 to 3 having the thermal expansion coefficient range according to some implementation of the present disclosure had improved rolling processability as compared with Comparative Examples 1 to 3.

Without being restricted to a specific theory, it was understood that in Examples 1 to 3, a difference in elongation between the commonly used aluminum current collector and the coated portion or the uncoated portion was able to be relieved despite the inclusion of the insulating coating layer, by using the electrode insulating polymer having the thermal expansion coefficient range according to some implementation of the present disclosure, and thus, breakages hardly occurred during the traveling process.

Meanwhile, as shown in Table 3, in Examples 1 to 3 in which the electrode insulating polymer having the thermal expansion coefficient range according to some implementation of the present disclosure was applied, no unusual circumstances were observed in the notching process, but in Comparative Example 1 in which other electrode insulating polymers were applied, tears occurred during the notching process, and though no tear occurred in Comparative Examples 2 and 3, wrinkle occurrence was observed. Thus, it was confirmed that in Examples 1 to 3, notching processability was improved as compared with the comparative examples. It is understood that the difference also resulted from whether the difference in elongation described above was present or absent, or was large or small.

In addition, as shown in Table 3, it was confirmed that Examples 1 to 3 in which the electrode insulating polymer having the thermal expansion coefficient range according to some implementation of the present disclosure hardly had curls even after vacuum drying, but Comparative Examples 1 to 3 in which other electrode insulating polymers were applied had a high curl occurrence degree.

This is understood to be due to the relief of elongation difference and/or improvement of stress relief behavior as described above, in Examples 1 to 3. However, it is understood that in Comparative Examples 1 to 3, the thermal properties of the electrode insulating polymer were inappropriate, so that curl occurrence subsequent to the relaxation of residual stress during the drying process became larger, unlike Example 1.

In addition, as shown in Table 3, Examples 1 to 3 in which the electrode insulating polymer having the thermal expansion coefficient range according to some implementation of the present disclosure had a swelling ratio after impregnation with an electrolyte solution of only a 7% level and no surface peeling due to impregnation with an electrolyte solution observed, but Comparative Example 1 which did not correspond thereto showed a high swelling ratio of a 19% level, and thus, it was confirmed that surface peeling occurred. Thus, it was confirmed that even when the electrode insulating polymer was applied on the uncoated portion of the electrode as described above, Example 1 had greatly improved processability in the manufacturing process, and simultaneously had resistance to an electrolyte solution equivalent to or higher than that of the conventional electrode insulating polymer.

The swelling ratio refers to a degree to which the structure of the insulating coating layer applied on the uncoated portion under the electrolyte solution impregnation circumstance became loose, and means that as the swelling ratio was higher, the frequency of penetration of electrolyte solution molecules into the coating layer was high. Without being restricted to a specific theory, as the swelling ratio shows a higher value, the possibility of coating layer peeling may increase in the electrolyte solution impregnation circumstance, and the peeling in the battery cell may seriously decrease a battery capacity and also may show a serious safety problem. Since in Example 1, the resistance to an electrolyte solution was excellent, as confirmed in the above, concerns about unnecessary capacity degradation or safety degradation may be prevented.

As a result, it was confirmed that fundamental safety improvement (such as short circuit prevention) due to application of the electrode insulating polymer according to some implementation of the present disclosure to the insulating coating layer may be promoted, and also the processability degradation or other defects due to the application may be improved.

The above description is only an example to which the principle of the present disclosure is applied, and other constitutions may be further included without departing from the scope of the present disclosure.

**Claims**

1. An electrode for a secondary battery comprising:

   a coated portion in which an electrode active material is placed on a current collector and an uncoated portion in which the electrode active material layer is not placed on the current collector; and
   an insulating coating layer which is placed on at least a part of the uncoated portion and includes an electrode insulating polymer,
   wherein the electrode insulating polymer has a thermal expansion coefficient of 66 um/m°C to 127 um/m°C.

2. The electrode for a secondary battery of claim 1, wherein the electrode insulating polymer has the thermal expansion coefficient of 72 um/m°C to 80 um/m°C.

3. The electrode for a secondary battery of claim 1, wherein the electrode insulating polymer includes at least one selected from the group consisting of a polyamide-based polymer, a polyamideimide-based polymer, a fluoroethylene-based polymer, a butadiene-based rubber, and a copolymer thereof.

4. The electrode for a secondary battery of claim 3, wherein the electrode insulating polymer includes the polyamide-based polymer and the fluoroethylene-based polymer, and the polyamide-based polymer and the fluoroethylene-based polymer may be included at a weight ratio of 1:8.5 to 1:9.5.

5. The electrode for a secondary battery of claim 1, wherein the electrode insulating polymer includes a copolymer including:

   an amide-imide-based first repeating unit; and
   at least one second repeating unit selected from the group consisting of butadiene-based, nitrile-based, and styrene-based repeating units.

6. The electrode for a secondary battery of claim 5, wherein the first repeating unit includes an aromatic ring.

7. The electrode for a secondary battery of claim 5, wherein the first repeating unit includes a benzene ring.

8. The electrode for a secondary battery of claim 5, wherein the second repeating unit is at least one selected from the group consisting of butadiene-based, acrylonitrile-butadiene-based, and hydrogenated acrylonitrile-butadiene-based repeating units.

9. The electrode for a secondary battery of claim 5, wherein a mole ratio between the first repeating unit and the second repeating unit is 60 to 80:40 to 20.

10. The electrode for a secondary battery of claim 5, wherein the copolymer is at least one selected from the group consisting of a random copolymer, an alternating copolymer, a block copolymer, and a graft copolymer.

11. The electrode for a secondary battery of claim 1, wherein the insulating coating layer is placed on at least a part of the coated portion and at least a part of the uncoated portion.

12. The electrode for a secondary battery of claim 11, wherein the insulating coating layer placed on at least a part of the uncoated portion and the insulating coating layer placed on at least a part of the coated portion are consecutive.

13. The electrode for a secondary battery of claim 1,

wherein the electrode is a positive electrode, and
the current collector includes at least one metal selected from the group consisting of stainless steel, nickel, titanium, aluminum, and an alloy thereof.

14. The electrode for a secondary battery of claim 1, wherein the uncoated portion in which the insulating coating layer is placed has an elongation of 25% to 43%.

15. A secondary battery comprising the electrode of any one of claims 1 to 14.

## INTERNATIONAL SEARCH REPORT

| International application No. |
| --- |
| **PCT/KR2025/002786** |

### A. CLASSIFICATION OF SUBJECT MATTER

**H01M 10/42**(2006.01)i; **H01M 4/66**(2006.01)i; **H01B 3/30**(2006.01)i; **H01B 3/44**(2006.01)i; **H01M 10/0525**(2010.01)i

According to International Patent Classification (IPC) or to both national classification and IPC

### B. FIELDS SEARCHED

Minimum documentation searched (classification system followed by classification symbols)

H01M 10/42(2006.01); H01G 11/70(2013.01); H01M 10/04(2006.01); H01M 10/0525(2010.01); H01M 2/26(2006.01); H01M 4/13(2010.01); H01M 4/62(2006.01); H01M 50/531(2021.01); H01M 50/586(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 활물질 (electrode active material), 코팅 (coating), 유지부 (coated area), 무지부 (non-coated area), 절연 (insulative), 고분자 (polymer), 열팽창 (thermal expansion)

### C. DOCUMENTS CONSIDERED TO BE RELEVANT

| Category* | Citation of document, with indication, where appropriate, of the relevant passages | Relevant to claim No. |
| --- | --- | --- |
| X<br>A | KR 10-2016-0060096 A (NISSAN MOTOR CO., LTD.) 27 May 2016 (2016-05-27)<br>See abstract; claims 1 and 8; paragraphs [0011], [0021], [0022] and [0032]; and figure 2. | 1-4,11-15<br><br>5-10 |
| X | JP 2016-219255 A (NISSAN MOTOR CO., LTD.) 22 December 2016 (2016-12-22)<br>See abstract; claim 1; paragraphs [0053], [0060] and [0061]; and figure 5. | 1-4,11-15 |
| X | JP 2020-202038 A (TOYOTA MOTOR CORP.) 17 December 2020 (2020-12-17)<br>See abstract; claim 1; paragraphs [0014] and [0017]; and figure 3. | 1,3,11-15 |
| X | KR 10-2023-0001690 A (LG ENERGY SOLUTION, LTD.) 05 January 2023 (2023-01-05)<br>See abstract; claims 1, 5, 6 and 13; paragraphs [0062]-[0064] and [0112]; and figure 7. | 1-3,11-15 |
| A | US 2021-0210761 A1 (NEC ENERGY DEVICES, LTD.) 08 July 2021 (2021-07-08)<br>See abstract; and claim 1. | 1-15 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 May 2025** | **01 June 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/002786**

| Patent document cited in search report | | | Publication date (day/month/year) | Patent family member(s) | | | Publication date (day/month/year) |
|---|---|---|---|---|---|---|---|
| KR | 10-2016-0060096 | A | 27 May 2016 | CN | 105706275 | A | 22 June 2016 |
| | | | | CN | 105706275 | B | 09 April 2019 |
| | | | | EP | 3065205 | A1 | 07 September 2016 |
| | | | | EP | 3065205 | B1 | 05 December 2018 |
| | | | | JP | 6146478 | B2 | 14 June 2017 |
| | | | | KR | 10-1802102 | B1 | 27 November 2017 |
| | | | | US | 2016-0260978 | A1 | 08 September 2016 |
| | | | | WO | 2015-064586 | A1 | 07 May 2015 |
| JP | 2016-219255 | A | 22 December 2016 | JP | 6531486 | B2 | 19 June 2019 |
| JP | 2020-202038 | A | 17 December 2020 | CN | 112054189 | A | 08 December 2020 |
| | | | | CN | 112054189 | B | 22 March 2024 |
| | | | | JP | 7169524 | B2 | 11 November 2022 |
| | | | | KR | 10-2020-0140726 | A | 16 December 2020 |
| | | | | KR | 10-2453758 | B1 | 14 October 2022 |
| | | | | US | 11450858 | B2 | 20 September 2022 |
| | | | | US | 2020-0388856 | A1 | 10 December 2020 |
| KR | 10-2023-0001690 | A | 05 January 2023 | None | | | |
| US | 2021-0210761 | A1 | 08 July 2021 | WO | 2017-163846 | A1 | 28 September 2017 |

Form PCT/ISA/210 (patent family annex) (July 2022)